# EUROPEAN PATENT SPECIFICATION

(11) **EP 0 996 296 B1**
(45) Date of publication and mention of the grant of the patent: **26.04.2006**
(21) Application number: 98203579.2
(22) Date of filing: 23.10.1998
(51) Int. Cl.: H04Q 3/00, H04Q 7/22

(54) **System for handling terminal mobility within TINA**
Verfahren zur Handlung von Endgerätsmobilität in TINA
Système pour gérer la mobilité des terminaux dans un environnement TINA

(43) Date of publication of application: 26.04.2000
(73) Proprietor: Koninklijke KPN N.V., 9726 AE Groningen (NL)
(72) Inventor: Doyle, Declan Joseph, 9723 AB Groningen (NL)
(74) Representative: Wuyts, Koenraad Maria

(56) References cited:
- EP-A- 0 647 055
- US-A- 5 670 950
- PAVON J ET AL: "The VITAL Network Resource Architecture" PROCEEDINGS TINA. GLOBAL CONVERGENCE OF TELECOMMUNICATIONS AND DISTRIBUTED OBJECT COMPUTING,17 November 1997, pages 130-138, XP002082940
- KRAUSE S ET AL: "MOBILE SERVICE AGENTS ENABLING "INTELLIGENCE ON DEMAND" IN TELECOMMUNICATIONS" COMMUNICATIONS: THE KEY TO GLOBAL PROSPERITY. GLOBECOM 1996, LONDON, NOV. 18 - 22, 1996, vol. 1, 18 November 1996, pages 78-84, XP000742130 INSTITUTE OF ELECTRICAL AND ELECTRONICS ENGINEERS

## Description

### BACKGROUND OF THE INVENTION

The invention relates to a system for handling terminal mobility within TINA.

Currently in TINA, there is no facility for handling terminal mobility. Krause S et al: "Mobile Service Agents enabling "Intelligence on demand" in Telecommunications"; (Communications: The Key to Global Prosperity. Globecom 1996, London, Nov. 18-22, 1996, vol. 1, 18 November 1996, pages 78-84, XP000742130 Institute of Electrical and Electronics Engineers) addresses the application of mobile agents to the field of telecommunications. This paper identifies the general need for agent concepts into emerging telecommunication architectures, such as CORBA or TINA. The present invention concerns an application of this general need aimed at handling terminal mobility.

Within the scope of the SMART Mobility project (Eurescom P608) it is investigated how terminal mobility could be implemented using the current TINA architecture. If a mobile terminal roams from one domain to another, the following existing TINA Computational Objects are involved in the appropriate accounting procedures:
SSM, (Service Session Manager)
USM, (Usage Session Manager)
namedUA, (namedUser Agent)
PA (Provider Agent)
SF (Service Factory)
asUAP (access session User Application)
ssUAP (service session User Application)
PeerA (Peer Agent)
PeerUSM (Peer Usage Session Manager)
Accounting Policy Manager, (APM)
Metering Manager, (MM)

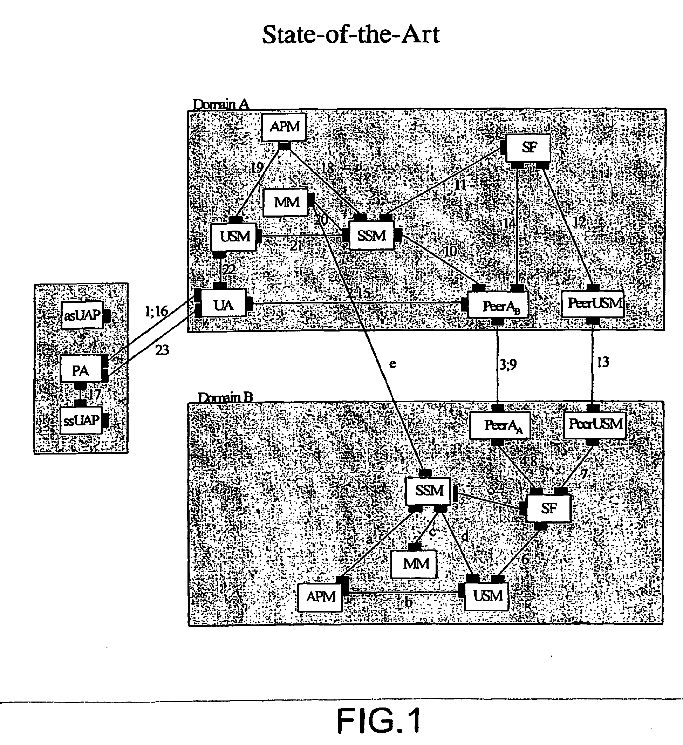

The interactions between these TINA COs with regard to accounting mechanisms is as follows (see figure 1):
1. The Mobile Terminal (UAP) is signalled that it is getting out of reach of the BCPN, and in reach of the public network. It signals via the PA to the UA that it requests a service session to be set up in the public network. UA may perform some actions, such as authorisation. UA may return unsuccessful, and raise an exception to the PA, if the UA wishes to refuse the request.
2. The UA requests the PeerAB to set up a service session in domain B.
3. PeerAB creates a federation join with invitation request and passes it to PeerAA in domain B.
4. PeerAA requests SFB to create a service session of the required type and to support the user in a normal usage party role, and in addition, to support a federated session in a usage peer role.
5. SFB creates and initialises the SSMB and interface references are returned.
6. The SFB creates and initialises the USMB and interface references are returned. NOTE: The B subscript denotes the domain B; it does not refer to another user.
7. The SFB creates and initialises the PeerUSMB and interface references are returned.
8. The SFB returns the interface references of the service session components to PeerAA.
9. Peer AA passes the interface references to PeerAB.
10. PeerAB passes a federation join with invitation request to SSMA.
11. SSMA makes a peer usage manager component request to SFA.
12. SFA creates PeerUSMA and initialises it.
13. The two PeerUSMs can now interact with each other for service specific purposes. (Note that no contact between the newly created service session in domain B and the user is made at this stage). A first interaction with PeerUSMB is required for PeerUSMA to pass its interface references.
14. SFA returns the interface reference of PeerUSMA to PeerAB.
15. PeerAB returns the interface reference of USMB to UAA.
16. UAA returns the interface reference of USMB to the PA.
17. The PA returns the reference of USMB to the service session related UAP.
18. APMA sends the accounting policy via its i_AccountingPolicyManager interface to SSMA via its I_AccountableMgt interface. Operation: propogate_policy.. (see also fig 4-7 in SCS v1.0b draft 0.4).
19. APMA sends the accounting policy via its i_AccountingPolicyManager interface to USMA via its i_AccountableMgt interface. Operation: propogate_policy.. (see also fig 4-7 in SCS v1.0b draft 0.4).
20. Once the service session is successfully established, SSMA starts accounting activities (corresponding to that specific service session and in accordance with the accounting policy) with the operation start(). Accounting events are pushed via its i_AccountingPushMgt interface to MMA via its i_MeteringManager interface. Operation: set_accounting_cycle(). (Note: The object(s) to which the SSM pushes its events is set by the set_Notification_Destination operation. This is determined by the APM).
21. Similarly, SSMA pushes accounting events via its i_AccountingPushMgt interface to USMA via its I_AccountingPush interface. Operation: set_accounting_cycle().
22. USMA pushes accounting events via its i_AccountingPushMgt interface to UAA via its i_AccountingPush interface. Operation: set_accounting_cycle(). UAA enables the storing and removal of accounting/billing events with the operations StoreBillingEvent, StoreBillingEventList, RemoveBillingEvent and RemoveBillingEventList.
23. UAA, via its i_AccountingPull interface, allows the PAA via its i_AccountingPull interface to retrieve accounting data. These are returned to asUAP. Operation: GetUserLogEntries() (or GetSessionLogEntries ()).

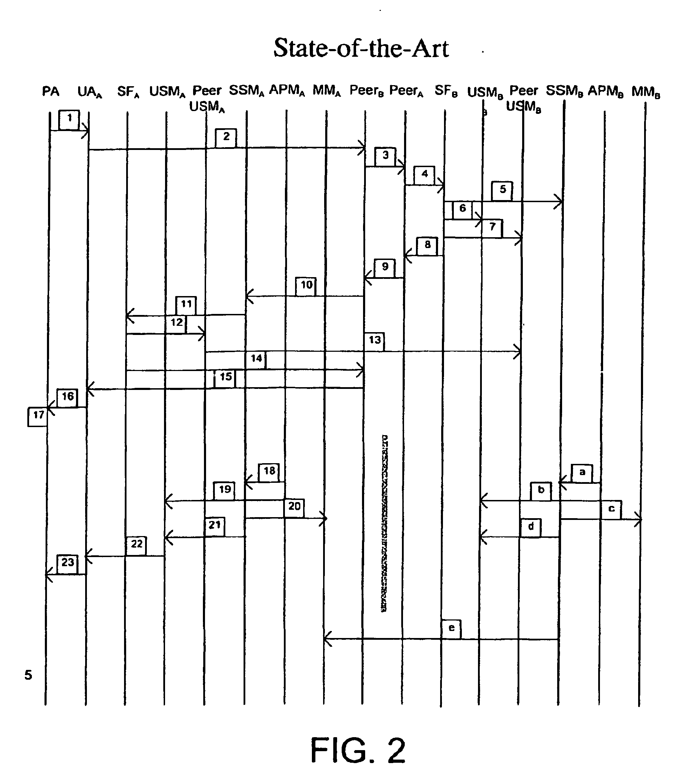

Similarly for domain B:
a. APMB sends the accounting policy via its i_AccountingPolicyManager interface to SSMB via its i_AccountableMgt interface. Operation: propogate_policy.. (see also fig 4-7 in [SCS]).
b. APMB sends the accounting policy via its i_AccountingPolicyManager interface to USMB via its i_AccountableMgt interface. Operation: propogate_policy.. (see also fig 4-7 in [SCS]).
c. Once the service session is successfully established, SSMB starts accounting activities (corresponding to that specific service session and in accordance with the accounting policy) with the operation start(). Accounting events are pushed via its i_AccountingPushMgt interface to MMB via its i_MeteringManager interface. Operations: set_accounting_cycle(), push(). (Note: The object(s) to which the SSM pushes its events is set by the set_Notification_Destination operation. This is determined by the APM).
d. Similarly, SSMB pushes accounting events via its i_AccountingPushMgt interface to USMB via its i_AccountingPush interface. Operations: set_accounting_cycle(), push().
e. In addition, SSMB pushes accounting events via its i_AccountingPushMgt interface to MMA via its i_MeteringManager interface. Operations: set_accounting_cycle(), push(). This is possible as domains A and B are federated in terms of accounting event management. This is reflected in the domains' respective APMs. This means that accounting events can travel freely, or via a specified gateway, between the two domains, with the condition that necessary security precautions are taken at the domain boundary. The event trace diagram (or Message Sequencing chart) is depicted in figure 2.

### SUMMARY OF THE INVENTION

The present invention involves the introduction of a new TINA Computational Object: the Mobile User Metering Manager (MUMM). According to the invention, said object comprises a subset of the processing rules and attributes of both the User Agent (UA) and the Metering Manager (MM). Essentially it facilitates the logging of accounting events corresponding to service usage by a specific user in a specific visited domain, in much the same fashion as that of the already existing MM. However, it is user dependent, that is, it contains attributes specific to a certain user, similarily to a User Agent. This enables the user to check his/her accounting status in the visited domain on-line (via the USM of the visted domain). Currently, in the state-of-the-art system this is not possible, as all accounting information pertaining to a specific user can only be checked there via that user's own User Agent.

Said new object according to the invention also facilitates long term accounting for a user residing in a visited domain for a period of time. All accounting events generated as a result of the user's service usage in the visited domain can be logged by the MUMM and stored there until the time the user leaves the visited domain (in accordance with an appropriate contract). Once the user leaves the domain, his/her accounting information is transferred to his/her home domain (in accordance with existing TINA mechanisms). This has the advantage that accounting events do not have to be continuously relayed to the user's home domain (incurring transport costs, security/confidentiality problems, etc.), while also enabling the user to be billed by one and only one retailer/service provider (i.e., the home domain).

The MUMM can be instantiated, transfer information and can be deleted according to a contract between user, user's home domain and the visited domain; thus federation agreements must exist between the home and visited domains (an issue extensively covered by existing TINA literature). It is instantiated by the User Agent Factory object of the visited domain, and constrained by the visited domain's MM and APM, and the user's UA (in the home domain). This information will be transferred from the home domain to the visited domain via the corresponding Peer Agents.

### EXEMPLARY EMBODIMENTS

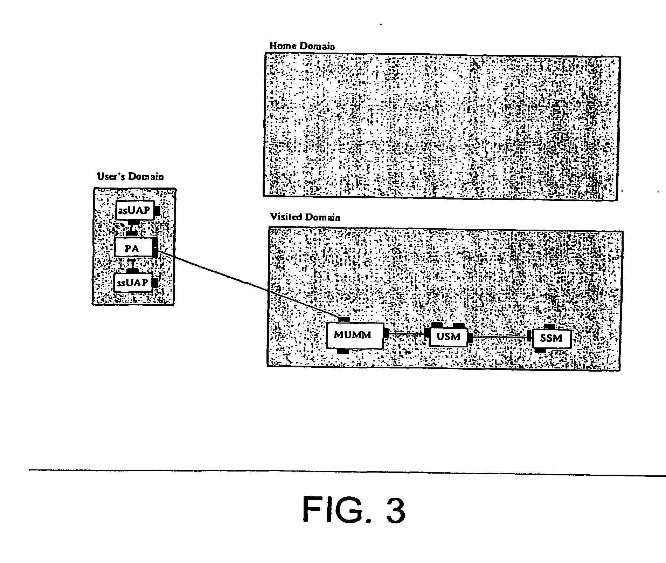

Figure 3 illustrates how the MUMM according tot the invention facilitates checking of accounting information on-line. Basically the SSM passes accounting events to the USM, which in turn passes these accounting events on to the MUMM. The MUMM thus enables the user, via the visited domain's PA and the UAPs, to check his/her accounting information. Therefore, it is in this capacity effectively acting as a stand-in User Agent in the visited domain. Note that the MUMM acts in the same manner as the MM (as shown in the previous diagram) for accounting within the visited domain; thus it is not shown below. In addition, the MM is unaffected by the presence of the MUMM, that is, it may still receive the same accounting events. Note also that it is now not necessary for the SSM in the visited domain to continuously transfer accounting events to the MM in the home domain directly (as illustrated in Figure 1). The MUMM collects these, and they may be transferred to the home domain in one batch, thus saving transport costs, leaving network resources free, etc.

## Claims

1. Telecommunication Information Network Architecture, abbreviated as TINA, based telecommunications system for handling terminal mobility, comprising a first TINA Computational Object called Metering Manager (MM) as well as a second TINA Computational Object called User Agent (UA), **characterized in** a third TINA Computational Object for managing mobile user metering (MUMM), said third TINA Computational object comprising
- a subset of processing rules and attributes referring to the logging of accounting events corresponding to service usage by a specific user in a specific visited domain, the processing rules and attributes of said subset being compatible with the processing rules and attributes of said already existing Metering Manager (MM) and
- a subset of user dependent processing rules and attributes of said User Agent (UA), facilitating consultation by said specific user in said specific visited domain of said

2. TINA based telecommunications system according to claim 1, **characterized in**, for facilitating long term accounting for a user residing in a visited domain for a period of time, accounting events generated as a result of the user's service usage in the visited domain being logged by said third TINA Computational Object for managing mobile user metering (MUMM), and stored there until the time the user leaves the visited domain, while once the user leaves the domain, the user's accounting information is transferred to the user's home domain.

3. TINA based telecommunications system according to claim 1, **characterized in that** said third TINA Computational Object for managing mobile user metering (MUMM) will be instantiated, transfer information and be deleted according to a contract between a user, the user's home domain and the visited domain, in conformity with a TINA federation agreement between the home and visited domains.

4. TINA based telecommunications system according to claim 3, **characterized in that** said third TINA Computational Object for managing mobile user metering (MUMM) will be instantiated by a TINA User Agent Factory Object of the visited domain, and constrained by the visited domain's Metering Manager (MM) and a TINA Accounting Policy Manager (APM), and the user's User Agent (UA) in the home domain, information for said instantiating and constraining being transferred from the home domain to the visited domain via corresponding Peer Agents (PeerA).

## Revendications

1. Système de télécommunications basé TINA (Architecture de réseau d'informations de télécommunications) pour gérer la mobilité des terminaux, comprenant un premier objet de traitement TINA appelé gestionnaire de comptage (MM) ainsi qu'un deuxième objet de traitement TINA appelé agent utilisateur (UA), **caractérisé par** un troisième objet de traitement TINA de gestion de comptage d'utilisateur mobile (MUMM), ledit troisième objet de traitement TINA comprenant :
- un sous-ensemble de règles et d'attributs de traitement concernant l'enregistrement des événements comptables correspondant à une utilisation de services par un utilisateur spécifique dans un domaine visité spécifique, les règles et les attributs de traitement dudit sous-ensemble étant compatibles avec les règles et les attributs de traitement dudit gestionnaire de comptage (MM) déjà existant et
- un sous-ensemble de règles et d'attributs de traitement, dépendants de l'utilisateur, dudit agent utilisateur (UA), facilitant la consultation par ledit utilisateur spécifique dans ledit domaine visité spécifique desdits événements comptables.

2. Système de télécommunications basé TINA selon la revendication 1, **caractérisé en ce que**, afin de faciliter une comptabilité à long terme pour un utilisateur résidant dans un domaine visité pendant une certaine période de temps, les événements comptables générés suite à l'utilisation de services de l'utilisateur dans le domaine visité sont enregistrés par ledit troisième objet de traitement TINA de gestion de comptage d'utilisateur mobile (MUMM), et stockés là jusqu'au moment où l'utilisateur quitte le domaine visité, les informations comptables de l'utilisateur étant transférées au domaine d'enregistrement de l'utilisateur une fois que celui-ci a quitté le domaine.

3. Système de télécommunications basé TINA selon la revendication 1, **caractérisé en ce que** ledit troisième objet de traitement TINA de gestion de comptage d'utilisateur mobile (MUMM) sera instancié, transférera des informations et sera supprimé selon un contrat entre un utilisateur, le domaine d'enregistrement de l'utilisateur et le domaine visité, en conformité avec un accord de fédération TINA entre le domaine d'enregistrement et le domaine visité.

4. Système de télécommunications basé TINA selon la revendication 3, **caractérisé en ce que** ledit troisième objet de traitement TINA de gestion de comptage d'utilisateur mobile (MUMM) sera instancié par un objet Classe d'agents utilisateur TINA du domaine visité, et contraint par le gestionnaire de comptage (MM) du domaine visité et un gestionnaire de règles comptables (APM) TINA, et l'agent utilisateur (UA) de l'utilisateur dans le domaine d'enregistrement, les informations pour ladite instanciation et pour ladite contrainte étant transférées depuis le domaine d'enregistrement jusqu'au domaine visité par l'intermédiaire des agents homologues (PeerA) correspondants.

## Patentansprüche

1. Telekommunikations-Informations-Netzwerk-Architektur, abgekürzt als TINA, basierte Telekommunikationsvorrichtung für die Handhabung von Endgerätsmobilität, umfassend sowohl ein erstes TINA Rechen-Objekt, benannt als Zählwerterfassungs-Verwalter (MM), als auch ein zweites TINA Rechen-Objekt, benannt als Benutzer-Agent (UA), **dadurch gekennzeichnet, dass** ein drittes TINA Rechen-Objekt für die Verwaltung von Mobilbenutzer Zählwerterfassung (MUMM) vorgesehen ist, wobei besagtes drittes TINA Rechen-Objekt umfasst
- einen Unter-Satz von Verarbeitungsregeln und Eigenschaften, die sich auf das Aufzeichnen von Abrechnungsvorgängen, entsprechend zur Dienstleistungs-Verwendung eines spezifischen Benutzers in einer spezifisch besuchten Domäne, beziehen, wobei die Verarbeitungsregeln und Eigenschaften von besagtem Unter-Satz (Subset) kompatibel mit den Verarbeitungsregeln und Eigenschaften von besagtem schon existierenden Zählwerterfassungs-Verwalter (Metering Manager; MM) sind, und
- einen Unter-Satz von benutzerabhängigen Verarbeitungsregeln und Attributen von besagtem Benutzer-Agent (UA), die das Konsultieren von besagten Abrechnungs-Vorgängen durch besagten spezifischen Benutzer in besagter spezifisch besuchter Domäne vereinfachen.

2. TINA basierte Telekommunikationsvorrichtung nach Anspruch 1, **dadurch gekennzeichnet, dass** zum Vereinfachen des langfristigen Abrechnens für einen Benutzer, der in einer besuchten Domäne für eine Zeitperiode residiert, Abrechnungsvorgänge, die als ein Resultat der Dienstleistungs-Verwendung des Benutzers in der besuchten Domäne generiert werden, durch besagtes drittes TINA Rechen-Objekt für die Mobilbenutzer Zählwerterfassungs-Verwaltung (MUMM) aufgezeichnet und dort bis zur der Zeit bis der Benutzer die besuchte Domäne verlässt gespeichert werden, wobei, sobald der Benutzer die Domäne verlässt, die Abrechnungsinformationen des Benutzers zur Heim-Domäne des Benutzers transferiert werden.

3. TINA basierte Telekommunikationsvorrichtung nach Anspruch 1, **dadurch gekennzeichnet, dass** besagtes drittes TINA Rechen-Objekt für die Mobilbenutzer Zählwerterfassungs-Verwaltung gemäss einem Vertrag zwischen einem Benutzer, der Heim-Domäne des Benutzers und der besuchten Domäne in Übereinstimmung mit einer TINA Verbunds-Abmachung zwischen der Heim-Domäne und besuchten Domänen instanziiert, Information übermittelt und gelöscht wird.

4. TINA basierte Telekommunikationsvorrichtung nach Anspruch 3, **dadurch gekennzeichnet, dass** besagtes drittes TINA Rechen-Objekt für die , Mobilbenutzer Zählwerterfassungs-Verwaltung (MUMM) durch ein TINA Benutzer-Agent-Betriebs-Objekt der besuchten Domäne instanziiert wird, und durch den Zählwerterfassungs-Verwalter (MM) der besuchten Domäne und durch einen TINA-Abrechnungsbestimmungs-Verwalter (APM) begrenzt wird, und der Benutzer-Agent (UA) des Benutzers in der Heim-Domäne, wobei Informationen für besagte Instanziierungen und Begrenzungen von der Heim-Domäne zur besuchten Domäne über entsprechende Peer-Agenten (PeerA) transferiert werden.
